# EUROPEAN PATENT APPLICATION

(11) **EP 3 709 568 A1**
(43) Date of publication of application: **16.09.2020**
(21) Application number: 19162987.2
(22) Date of filing: 14.03.2019
(51) Int. Cl.: H04L 9/32, H04L 9/08

(54) **DELETING USER DATA FROM A BLOCKCHAIN**

(71) Applicant: Nokia Technologies Oy, 02610 Espoo (FI)
(72) Inventor: PAPILLON, Serge, 75014 Paris (FR); KRIAA, Siwar, 91620 Nozay (FR); EL ABED, Haithem, 91620 Nozay (FR)
(74) Representative: Novagraaf Technologies

(57) **Abstract**

For deleting user data from a blockchain in a blockchain network, a node is able to:
retrieve a deletion transaction broadcasted in the blockchain network that identifies user data to be deleted in a previous bloc in the blockchain,
delete user data identified in the deletion transaction,
add a modification record in the previous block, the modification record containing a link to a deletion transaction record to be stored in a new block of the blockchain, the link identifying the new block and the transaction record,
determine the initial hash of the previous block prior the deletion of the user data and the new hash of the previous block after the deletion of the user data and the addition of the modification record,
store the retrieved deletion transaction in a deletion transaction record in a new block to be added to the blockchain, the deletion transaction record containing the identification of user data deleted in the previous bloc in the blockchain, the determined initial hash and the determined new hash,
broadcast the new block containing the deletion transaction record to the blockchain network.

## Description

### FIELD OF INVENTION

The present subject matter generally relates to blockchains, distributed databases, distributed ledgers, and cryptographic protocols. Furthermore, the present application relates to modifying data in a blockchain.

### BACKGROUND

In the recent few years, with the relative success of cryptocurrency (in particular Bitcoins), a wide attention has been given to the underlying technology, namely Blockchain. The data structure associated with blockchain allows the appending of transactions in a permanent fashion. Once the transaction is added, it can no longer be removed.

Alongside the transactions, pieces of data could be stored, as comments for example. Even though the miners ignore the content of this data, nevertheless this data becomes permanently part of the blockchain as it is included in the hash computation used for the integrity of the blockchain.

These extra fields could be used as an underlay of different kind of service, for example a filesystem. These data can be exposed to the public through a web site where they can be browsed in a regular fashion (the data could be of any type of media: text, image, video, audio etc.).

Blockchain systems are used todays to provide multiple kind of services. Some of them are storing some private data or even personally identifiable information. New regulations like the European General Data Protection Regulation (GDPR) gives the right to people to have personal data concerning them erased in some conditions: "*(65) [...] In particular, a data subject should have the right to have his or her personal data erased and no longer processed where the personal data are no longer necessary in relation to the purposes for which they are collected or otherwise processed, where a data subject has withdrawn his or her consent or objects to the processing of personal data concerning him or her, or where the processing of his or her personal data does not otherwise comply with this Regulation*."

A problem with a blockchain system is that data that are stored in such systems are immutable by essence. Currently, there is no solution to we reconcile Blockchain based systems that store personally identifiable information with regulation like GDPR.

The problem is even more general as any kind of data may be registered in some blockchain based system, be them public or private. Some data that may break some rules and be subject to an erase order from some authorities.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, a method for deleting user data from a blockchain in a blockchain network, the method being performed at a node of the blockchain network, the node storing a copy of the blockchain, comprises:
retrieving a deletion transaction broadcasted in the blockchain network that identifies user data to be deleted in a previous bloc in the blockchain,
deleting user data identified in the deletion transaction,
adding a modification record in the previous block, the modification record containing a link to a deletion transaction record to be stored in a new block of the blockchain, the link identifying the new block and the transaction record,
determining an initial hash of the previous block prior the deletion of the user data and a new hash of the previous block after the deletion of the user data and the addition of the modification record,
storing the retrieved deletion transaction in a deletion transaction record in a new block to be added to the blockchain, the deletion transaction record containing the identification of user data deleted in the previous bloc in the blockchain, the determined initial hash and the determined new hash,
broadcasting the new block containing the deletion transaction record to the blockchain network.

Advantageously, data deletion can be addressed from the blockchain in general which is necessary in some cases for the blockchain to be compliant with some regulations. This information can be for instance personally identifiable information in the context of the GDPR regulation or it can be any other sensitive or illegal information which once added to the blockchain can no longer be erased. Even after several deletions, an auditor should be able to certify that the ledger is still correct.

In an embodiment, user data are located in a given field from a record in a block or located at a given offset with a given length in a block.

In an embodiment, user data are deleted by being replaced by no data, by random data or by deletion pattern.

In an embodiment, the broadcasted new block is to be validated by other miners on the blockchain network.

In an embodiment, the deletion transaction record further contains an identifier of the deletion transaction.

In an embodiment, the initial hash is retrieved in the block next to said previous block in the blockchain.

In an embodiment, the new hash is calculated with respect to the content of the modified previous block.

In an embodiment, user data are personal data that contains private data, personally identifiable information or sensitive personal information.

In an embodiment, the retrieved deletion transaction is broadcasted by a service provider providing services to a set of communication devices relying on the blockchain network.

In another implementation, an apparatus for deleting user data from a blockchain in a blockchain network, the apparatus being a node of the blockchain network and storing a copy of the blockchain, comprises:
one or more network interfaces to communicate with the blockchain network;
a processor coupled to the network interfaces and configured to execute one or more processes; and
a memory configured to store a process executable by the processor, the process when executed operable to:
   retrieve a deletion transaction broadcasted in the blockchain network that identifies user data to be deleted in a previous bloc in the blockchain,
   delete user data identified in the deletion transaction,
   add a modification record in the previous block, the modification record containing a link to a deletion transaction record to be stored in a new block of the blockchain, the link identifying the new block and the transaction record,
   determine the initial hash of the previous block prior the deletion of the user data and the new hash of the previous block after the deletion of the user data and the addition of the modification record,
   store the retrieved deletion transaction in a deletion transaction record in a new block to be added to the blockchain, the deletion transaction record containing the identification of user data deleted in the previous bloc in the blockchain, the determined initial hash and the determined new hash,
   broadcast the new block containing the deletion transaction record to the blockchain network.

In another implementation a computer-readable medium having embodied thereon a computer program for executing a method for deleting user data from a blockchain in a blockchain network is provided. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 illustrates a schematic block diagram of a communication system according to one embodiment of the invention.
FIG. 2 illustrates a schematic block diagram of a previous block containing user data to be deleted in a blockchain in accordance with at least some embodiments of the present invention.
FIG. 3 illustrates a flow chart illustrating a method in accordance with at least some embodiments of the present invention.
FIG. 4 illustrates a schematic block diagram of some blocks verifying the integrity of the blockchain in accordance with at least some embodiments of the present invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

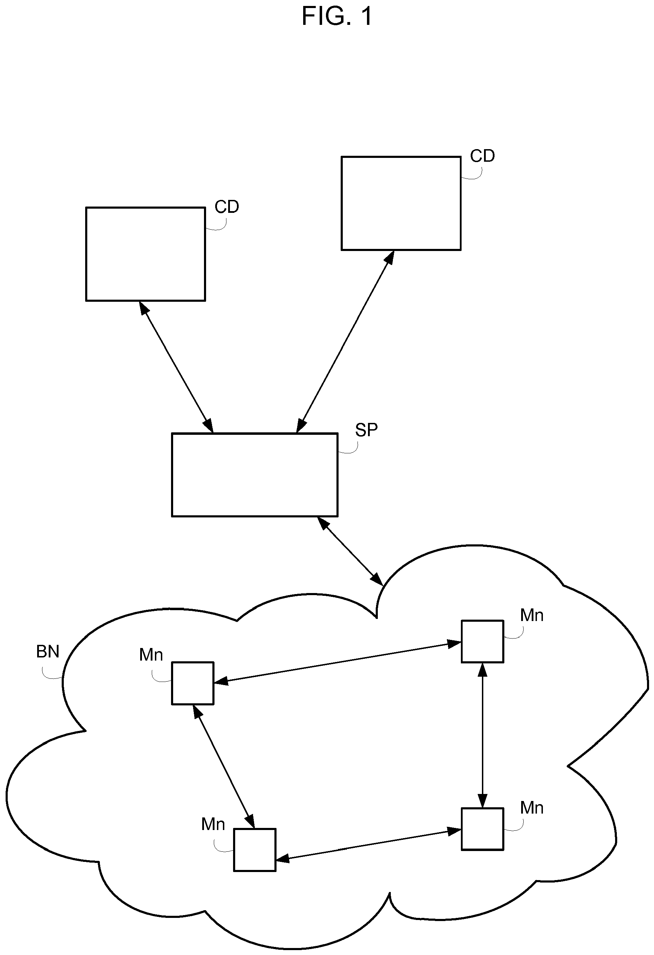

Referring to FIG. 1, a service provider SP communicates with a set of communication devices CD and a blockchain network BN. The service provider SP is an entity developing decentralized applications based on blockchain technology and providing services to the set of communication devices CD relying on the blockchain network BN.

Data packets (e.g., traffic and/or messages sent between the communication devices CD) may be exchanged among the communication devices CD and the blockchain network BN using predefined network communication protocols such as certain known wired protocols, wireless protocols (e.g., IEEE Std. 802.15.4, WiFi, Bluetooth®, etc.), or other shared-media protocols where appropriate. In this context, a protocol consists of a set of rules defining how the nodes interact with each other.

A communication device CD is equipped with an application or a browser able to connect to the service provider SP and use a service provided by this latter. The communication device CD can be corporate, authority, and/or user device, such as a server device, a desktop/tablet/laptop computer, smartphone, a machine-to-machine (M2M) device, a set-top box or other suitable electronic device.

Innovative decentralized data storage solutions, such as blockchains, enable to provide provenance and also to avoid the need to rely on third parties to regulate information and data systems. In addition, blockchain platforms can host "smart contracts" which could replace established methods based on human witnesses with logical software-implemented protocols.

"Smart contracts" may be defined as computer programs designed to automate the execution of the terms of a machine-readable contract or agreement. Unlike a traditional contract which would be written in natural language, a smart contract is a machine executable program which comprises rules that can process inputs in order to produce results, which can then cause actions to be performed dependent upon those results.

A blockchain network BN relies on a blockchain architecture that is a distributed computing architecture where every network node executes and records the same transactions grouped into blocks. Only one block can be added at a time, and every block contains a mathematical proof that verifies that it follows in sequence from the previous block. In this way, the blockchain's distributed database is kept in consensus across the whole network, and this is achieved without the need of a central authority. Nodes that maintain and verify the network may be incentivized by mathematically enforced economic incentives coded into the protocol. The blockchains can work in different ways, as well as in different scales.

The nodes of a blockchain network may comprise corporate, authority, and/or user devices, such as a server, a desktop/tablet/laptop computer, smartphone or other suitable electronic device. The system may comprise an administrator or management node, a relay or other kind of intermediate device for connecting a node to further networks or services, such as another distributed or centralized computing system or a cloud service. The nodes are mutually addressable in a suitable way, for example, they may be connected to an internet protocol, IP, network. Messages released into the IP network with a recipient address are routed by the network to the recipient node identified by the recipient address. IP is not the only suitable networking technology used, for example, other peer-to-peer networking models are also suitable.

The blockchain state information shared by the nodes may store all the transactions and history carried out in the network. The blockchain state information is stored in or as a blockchain ledger. Each node comprises the ledger whose content is in sync with other ledgers. The nodes may validate and commit transactions in order to reach consensus. Each node may have their own copy of the ledger and is permission-controlled, so participants see only appropriate transactions. Application of blockchain technology and the ledger enable a way to track the unique history of transactions by the individual nodes in the network.

A blockchain begins with the creation of a 'genesis' block. Each subsequent block then includes a hash of the previous block in the block chain. This has two effects: 1.) modifying an existing block would also require regenerating each block after it, which is highly impractical from a computational standpoint and prevents malicious changes and 2.) the hashing mechanism provides an ordering to the blocks that traces all the way back to the genesis block, allowing devices to track changes in the system. The actual data content of the blocks can also vary. For example, while blocks in a cryptocurrency typically include a listing of currency exchanges/transactions, the data in the blocks is not limited as such and can include any information.

Blockchain systems typically implement a peer-to-peer system based on some combination of encryption, consensus algorithms, and proof-of-X, where X is some aspect that is difficult to consolidate across the network, such as proof-of-work, proof-of-stake, proof-of-storage, etc. Typically, those actors on a network having proof-of-X arrive at a consensus regarding the validation of peer-to-peer transactions. Some private blockchains do not implement proof-of-X consensus, e.g., where the computing hardware implementing the blockchain is controlled by trusted parties. Chained cryptographic operations tie a sequence of such transactions into a chain that once validated, is typically prohibitively computationally expensive to falsify.

The blockchain network can be public or private. A public blockchain is a blockchain that anyone can read, send transactions and expect to see them included if they are valid, and anyone can participate in a consensus process for determining what blocks get added to the chain. Different kinds of private blockchain may be distinguished. A fully private blockchain is a blockchain where write permissions are kept to one organization. Read permissions may be public or restricted to certain participants. A consortium blockchain is a blockchain where a consensus process is controlled by a pre-selected set of nodes, for example, a consortium of 15 financial institutions, each of which operates a node and of which 10 must sign every block in order for the block to be valid. The right to read the blockchain may be public or restricted to the participants. A semi-private blockchains is run by a single company who grants access to any user who qualifies, and it typically targets business-to-business users. Examples of semi-private blockchains could include ones for government entities for record-keeping, land titles, public records, etc.

A node establishing the next block in a blockchain may be known as a miner node Mn (four miner nodes Mn are represented as example in FIG. 1). A miner node may compile a set of transactions, which it receives from the broadcasts, for the next block, and search for a proof-of-work code that covers all the transactions in the set of transactions for the next block. For example, the proof-of-work code may be a numerical value, with which the contents of the next block, that is, the set of transactions, hashes to a value that is less than a threshold. Once a miner discovers the proof-of-work, it can publish the block, which other nodes of the system will then add to the block chain as the new most recent established block.

According to some embodiments of the present invention, the transmission of a notification, or any other transmission, to the blockchain refers to linking the current transmission, i.e., block, to a previous block in the blockchain. For example, a first block of the blockchain may comprise a secret key or its hash. Thus, the transmission of the notification to the blockchain may be seen as a transaction that is added to the blockchain. A block in the blockchain may comprise a block ID, hash of the previous block and the transaction or transactions of the block.

A block of the blockchain may comprise at least header fields and a set of transactions that forms an actual transaction data of the block. In terms of the present invention, the transactions may comprise top hash entries, optionally with their timestamps, provided for storage into the block chain. The transactions may also comprise different kinds of transactions, as the block chain need not be dedicated to one single type of transaction.

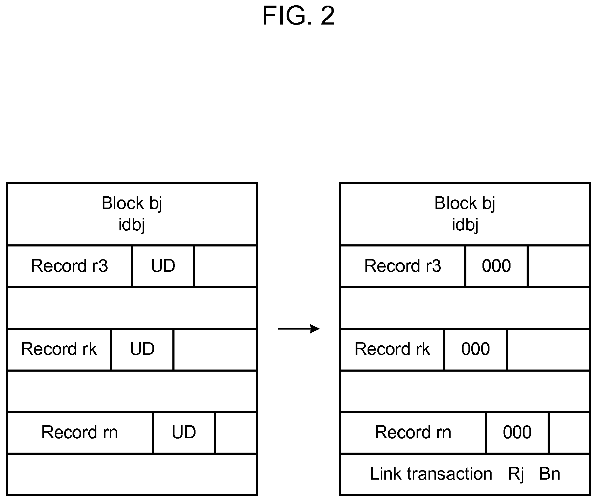

Referring to FIG. 2, according to some embodiments of the present invention, the service provider is aware of a need for user data deletion for a client. For example, user data are personal data of a user that can be private data, personally identifiable information or sensitive personal information. User data could be defined also as any information about an individual maintained by an agency.

A new type of transaction is created, called 'deletion transaction', that expresses the right of a user to erase some user data from the blockchain. The service provider generates a list of transactions (Rᵢ) that will precisely ask for every data deletion. Each of these transactions will refer to the deletion transaction and specify the bloc (bⱼ) and the record (rⱼ) of the transaction were the deletion takes place, and the precise location of the data to be erased. In one embodiment, the service provider could cluster in one transaction (Rⱼ) all the data deletion requests that targets one block (bⱼ) for performance purpose.

A deletion transaction may look like the following:
[deletion record; idl; "erase some user data"; from www; verified]
A miner will record this deletion transaction after verification that the transaction is genuine, with respect to service provider policy.

The service provider can generate the following transactions, in an illustrative example:
[for deletion order idl, in block bl, erase: field 2 in transaction record rl, field 5 in transaction record rk]
[for deletion order idl, in block bj, erase: field 4 in record r3, field 3 in record rk, field 5 in record rn]
[for deletion order idl, in block bm, erase data at offset:xxx and length:xxxx in record rp]

The determination of the location of the user data to be erased may depend on the block structure. For example, data may be located in a given field from a record in a block, or may be located at a given offset with a given length in a block.

A miner can remove all user data designated by location from identified block. User data are removed either by filling random data or deletion pattern-like "DELETEDDELETED..." or "00000..." in place of the user data, or by simply getting rid of the data without data replacing the user data, depending how the record is structured. But by doing so, the integrity checks of the blockchain won't be possible any more. As mentioned before, the integrity of a blockchain is implemented this way: each block records the hash (with a hash function) of the previous block. In this way, any change of a data in one transaction record of one block will change the hash value of this block, hence break the hash chain in the following blocks.

In order to keep trace of the integrity check, the miner can record the hash of a previous block touched by a deletion of user data in a transaction record of the current block, thus recording the initial hash of the previous block prior the deletion of the user data and the new hash of the previous block after the deletion of the user data.

The transaction records will now look like, in the illustrative example:
[R1, idRl, idl; idbl; idrl; field 2; idrk; field 5; initialblHash; currentblHash]
[Rj, idRj, idl; idbj; idr3; field 4; idrk; field 3; idrn; field 5; initialbjHash; currentbjHash]
[Rm, idRm, idl; idbm; idrp; offset:xxx and length:xxxx; initialblHash; currentblHash]

In order to ease the verification of the integrity of a blockchain, an additional record (a modification reference record) is added in the previous block (where user data have been deleted), this additional record containing a link to the transaction record (Ri) that applies to the previous block. The link to a transaction record can contain the identifier of the block where the transaction record is created and the identifier of the transaction record.

Referring again to FIG. 2, a miner can identify a block bj by identifier idbj with three zones of user data to be erased in record r3, rk and rn. The miner replaces user data UD by "000" for example in each record and adds a modification record that is a link "Link transaction" to the transaction record Rj in the new block Bn.

All further modifications in the same block (for another deletion request) can be recorded in this record or in separate records.

The miner has to compute a proof of work to validate the new bloc. As soon as the proof of work for the new block is completed, the miner creates a new block Bn storing the recent transaction Rj not yet included in a block and including the proof of work, updates its copy of the blockchain with the new block Bn and broadcasts the new block Bn to the network. The new block is verified by validators until consensus is reached and work begins on a new transaction block.

The miner is an apparatus that may be any suitable physical hardware configuration such as: one or more server(s), blades consisting of components such as processor, memory, network interfaces or storage devices. In some of these embodiments, the apparatus may include cloud network resources that are remote from each other.

In some embodiments, the apparatus may be virtual machine. In some of these embodiments, the virtual machine may include components from different machines or be geographically dispersed. The apparatus may comprise one or more network interfaces (e.g., wired, wireless, etc.), at least one processor, and a memory interconnected by a system bus and powered by a power source (e.g., one or more batteries or other charge storage devices, a power line, etc.).

The network interface(s) contain the mechanical, electrical, and signaling circuitry for communicating data over links coupled to the blockchain network. The network interfaces may be configured to transmit and/or receive data using a variety of different communication protocols according to the blockchain network.

The memory comprises a plurality of storage locations that are addressable by the processor and the network interfaces for storing software programs and data structures associated with the embodiments described herein. The processor may comprise hardware elements or hardware logic adapted to execute software programs. An operating system, portions of which are typically resident in memory and executed by the processor, functionally organizes the device by, inter alia, invoking operations in support of software processes and/or services executing on the apparatus.

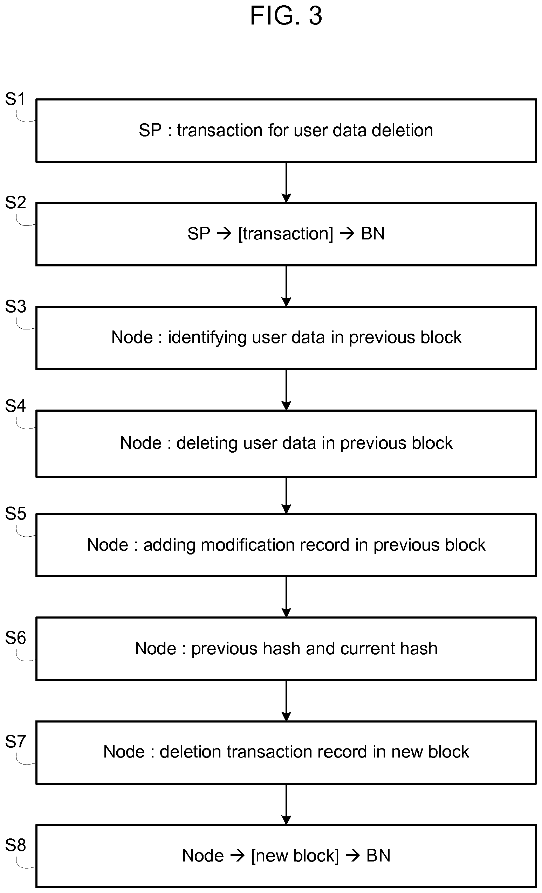

With reference to FIG. 3, a method for deleting user data from a blockchain according to one embodiment of the invention comprises steps S1 to S8.

In step S1, the service provider SP generates a deletion transaction that identifies user data to be deleted in a previous bloc in the blockchain. Especially, the deletion transaction indicates the precise location of user data to be deleted in a previous bloc in the blockchain, for example by specifying the bloc and the record in the bloc where the deletion has to take place.

In step S2, the service provider SP broadcasts the deletion transaction on the blockchain network BN in order that miners execute the deletion transaction.

In step S3, a node acting as a miner retrieves the deletion transaction and identifies the user data in the previous block where the deletion has to take place.

In step S4, the node deletes user data identified in the deletion transaction in the previous bloc.

In step S5, the node adds a modification record in the previous block. The modification record contains a link to a transaction record to be created in a new block, the link identifying the new block and the transaction record.

In step S6, the node determines the initial hash of the previous block prior the deletion of the user data and the new hash of the previous block after the deletion of the user data. For example, the miner retrieves the initial hash present in the block next to said previous block in the blockchain and calculates itself the new hash, i.e. with respect to the content of the modified previous block.

In step S7, the node stores the deletion transaction in a deletion transaction record in a new block to be added to the blockchain. The deletion transaction record contains the identification of user data deleted in the previous bloc in the blockchain, the determined initial hash and the determined new hash. The deletion transaction record further contains an identifier of the deletion transaction.

In step S8, once the new block has been mined by the node, it will be broadcasted to the other miners on the blockchain network. Other miners will check the validity of the block before try to create new block after it. Each transaction should be valid. It means that each deletion transaction should have a valid deletion transaction identifier, and the previous hash and current hash of the modified block will be recalculated to be checked, meaning that the modification records will be checked for validity as well.

An embodiment comprises a node under the form of an apparatus comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

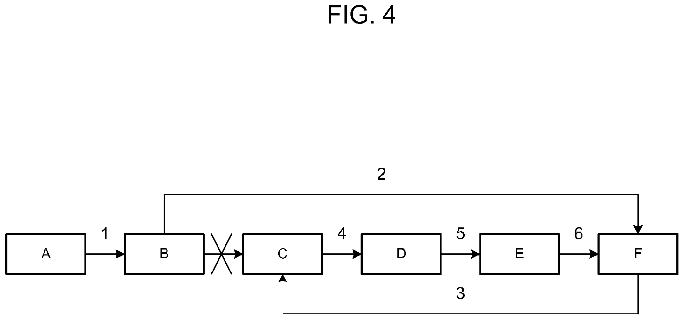

With reference to FIG. 4, a new comer must be able to verify the integrity of the blockchain that he gets (from adjacent nodes or from other location). In a regular chain of blocks the verification of the integrity is done sequentially and in chronological order : block "n" is verified by checking its hash against the stored hash in next block "n+1", etc.

When a deletion occurs in a block as depicted in the following diagram (Block B), the integrity check sequence, after having checked block A (arrow 1), is redirected (arrow 2) to the forward block where the deletion transaction occurred (Block F), this block is first checked for integrity (by comparing its hash to the one stored in the next block (a Block G not shown) as usual), then the new hash for the block B contained in this block F is used to validate the integrity of the modified block B. The validation sequence is sent back (arrow 3) where it can be resumed again chronologically from Block C forward. Blocks C, D and E are then checked (arrows 4, 5 and 6) sequentially in a normal manner.

## Claims

1. A method for deleting user data from a blockchain in a blockchain network (BN), the method being performed at a node of the blockchain network, the node storing a copy of the blockchain, the method comprising:
retrieving (S3) a deletion transaction broadcasted in the blockchain network that identifies user data to be deleted in a previous bloc in the blockchain,
deleting (S4) user data identified in the deletion transaction,
adding (S5) a modification record in the previous block, the modification record containing a link to a deletion transaction record to be stored in a new block of the blockchain, the link identifying the new block and the transaction record,
determining (S6) an initial hash of the previous block prior the deletion of the user data and a new hash of the previous block after the deletion of the user data and the addition of the modification record,
storing (S7) the retrieved deletion transaction in a deletion transaction record in a new block to be added to the blockchain, the deletion transaction record containing the identification of user data deleted in the previous bloc in the blockchain, the determined initial hash and the determined new hash,
broadcasting (S8) the new block containing the deletion transaction record to the blockchain network.

2. The method as claimed in claim 1, wherein user data are located in a given field from a record in a block or located at a given offset with a given length in a block.

3. The method as claimed in claim 1, wherein user data are deleted by being replaced by no data, by random data or by deletion pattern.

4. The method as claimed in claim 1 or 2, wherein the broadcasted new block is to be validated by other miners on the blockchain network.

5. The method as claimed in any of the preceding claims, wherein the deletion transaction record further contains an identifier of the deletion transaction.

6. The method as claimed in any of the claims 1 to 5, wherein the initial hash is retrieved in the block next to said previous block in the blockchain.

7. The method as claimed in any of the claims 1 to 6, wherein the new hash is calculated with respect to the content of the modified previous block.

8. The method as claimed in any of the claims 1 to 7, wherein user data are personal data that contains private data, personally identifiable information or sensitive personal information.

9. The method as claimed in any of the claims 1 to 8, wherein the retrieved deletion transaction is broadcasted by a service provider providing services to a set of communication devices relying on the blockchain network.

10. An apparatus for deleting user data from a blockchain in a blockchain network (BN), the apparatus being a node of the blockchain network and storing a copy of the blockchain, the apparatus comprising:
one or more network interfaces to communicate with the blockchain network;
a processor coupled to the network interfaces and configured to execute one or more processes; and
a memory configured to store a process executable by the processor, the process when executed operable to:
retrieve a deletion transaction broadcasted in the blockchain network that identifies user data to be deleted in a previous bloc in the blockchain,
delete user data identified in the deletion transaction,
add a modification record in the previous block, the modification record containing a link to a deletion transaction record to be stored in a new block of the blockchain, the link identifying the new block and the transaction record,
determine the initial hash of the previous block prior the deletion of the user data and the new hash of the previous block after the deletion of the user data and the addition of the modification record,
store the retrieved deletion transaction in a deletion transaction record in a new block to be added to the blockchain, the deletion transaction record containing the identification of user data deleted in the previous bloc in the blockchain, the determined initial hash and the determined new hash,
broadcast the new block containing the deletion transaction record to the blockchain network.

11. A computer-readable medium having embodied thereon a computer program for executing a method for deleting user data from a blockchain in a blockchain network according to any of claims 1 to 9.
